# DEMANDE DE BREVET EUROPEEN

(11) **EP 4 819 502 A1**
(43) Date de publication de la demande: **07.10.2026**
(21) Numéro de dépôt: 26167895.7
(22) Date de dépôt: 26.03.2026
(51) Int. Cl.: H04B 5/24, G06K 7/10, H04B 5/77

(54) **DISPOSITIF NFC**

(30) Priorité: 31.03.2025 FR 2503302
(71) Demandeur: STMicroelectronics International N.V., 1228 Plan-les-Ouates, Geneva (CH)
(72) Inventeur: ENGELS, Sylvain, 38240 MEYLAN (FR); MERCIER, Julien, 13105 MIMET (FR)
(74) Mandataire: Cabinet Beaumont

(57) **Abrégé**

La présente description concerne un dispositif NFC configuré pour, dans un mode de carte :
- lorsqu'il reçoit une trame qu'il identifie comme non valide, stocker tout ou partie de ladite trame dans une première mémoire du dispositif ; et
- analyser tout ou partie de ladite trame.

## Description

### Domaine technique

La présente description concerne de façon générale les dispositifs NFC et leurs procédés de fonctionnement.

### Technique antérieure

Certaines normes ou protocoles NFC tels que la norme ISO 14443-3:2018 ou encore le forum NFC pour le type A ou B, ne proposent pas de solutions satisfaisantes pour adresser certaines situations.

### Résumé de l'invention

Il existe un besoin de proposer des dispositifs NFC permettant d'adresser certaines situations relatives à la réception de trames non attendues qu'elles soient erronées ou non.

Un mode de réalisation pallie tout ou partie des inconvénients des dispositifs connus.

Un mode de réalisation prévoit un dispositif NFC configuré pour, dans un mode de carte :
- lorsqu'il reçoit une trame qu'il identifie comme non valide, stocker tout ou partie de ladite trame dans une première mémoire du dispositif ; et
- analyser tout ou partie de ladite trame.

Selon un mode de réalisation, l'analyse est faite par un programme stocké dans ledit dispositif.

Un mode de réalisation prévoit un procédé de fonctionnement d'un dispositif NFC, comprenant :
dans un mode de carte,
- lorsque le dispositif reçoit une trame qu'il identifie comme non valide, stocker tout ou partie de ladite trame dans une première mémoire du dispositif ; et
- analyser, par exemple par l'exécution d'un programme, tout ou partie de ladite trame.

Selon un mode de réalisation, en fonction de l'analyse, le programme provoque une modification du fonctionnement du dispositif.

Selon un mode de réalisation, en fonction de l'analyse, un mode de fonctionnement du dispositif est modifié.

Selon un mode de réalisation, l'identification de la trame comme non valide est mise en œuvre par un décodeur radiofréquence.

Selon un mode de réalisation, l'identification de la trame comme non valide correspond à la réception d'une trame courte telle que définie dans la norme ISO 14443-3:2018 lorsque le dispositif NFC est dans un état de protocole, autrement appelé mode de protocole, du mode de carte à couplage inductif de proximité.

Selon un mode de réalisation, ladite trame courte est non-erronée.

Selon un mode de réalisation, lorsque le dispositif NFC est dans ledit état, ou mode, de protocole, ladite trame courte est décodée avant d'être stockée dans ladite première mémoire.

Selon un mode de réalisation, après décodage, une interruption de l'état, ou du mode, de protocole est générée.

Selon un mode de réalisation, le dispositif est configuré pour, suite à ladite interruption, stocker dans une deuxième mémoire du dispositif au moins un évènement de réception.

Selon un mode de réalisation, la deuxième mémoire est un registre.

Selon un mode de réalisation, l'évènement de réception et le contenu de ladite trame sont analysés par le dispositif pour modifier un mode de fonctionnement du dispositif.

Selon un mode de réalisation, l'évènement de réception et le contenu de ladite trame sont analysés par le programme pour modifier un mode de fonctionnement du dispositif.

Selon un mode de réalisation, suite à la réception de ladite trame courte, le dispositif met en œuvre un mode propriétaire différent de l'état, ou du mode, de protocole défini dans la norme ISO 14443-3:2018.

Selon un mode de réalisation, l'identification de la trame comme non valide correspond à l'identification d'une erreur associée à ladite trame.

Selon un mode de réalisation, l'erreur correspond à au moins un bit erroné, à une erreur de modulation, à une erreur de code redondance cyclique, à une erreur de parité, ou à une erreur de temporalité.

Selon un mode de réalisation, ladite trame identifiée comme non valide est décodée puis stockée dans ladite première mémoire.

Selon un mode de réalisation, l'identification de ladite erreur s'accompagne :
- de la génération, par le décodeur radiofréquence, d'un statut relatif à ladite erreur, et de son stockage dans une troisième mémoire du dispositif ; et
- d'un réveil d'une unité de traitement du dispositif pour démarrer l'analyse ;
ledit statut relatif à ladite erreur et le contenu de ladite trame étant analysés, après réveil de ladite unité de traitement, pour modifier un état, ou un mode, de fonctionnement du dispositif.

Selon un mode de réalisation, la troisième mémoire est par exemple un registre.

Selon un mode de réalisation, suite à l'analyse du statut relatif à ladite erreur et du contenu de ladite trame, le dispositif bascule dans un mode inactif ou dans un mode d'activation ou dans un mode propriétaire.

Selon un mode de réalisation, lorsque l'identification de ladite erreur a lieu dans un mode de protocole, alors l'identification de ladite erreur s'accompagne d'une interruption du mode de protocole.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente une vue très schématique d'un dispositif NFC d'un système NFC auquel s'appliquent les modes de réalisation ;
la figure 2 représente un procédé de fonctionnement d'un dispositif NFC de la figure 1 selon la norme ISO 14443-3:2018 ;
la figure 3 représente un procédé de fonctionnement d'un dispositif NFC de la figure 1 selon un mode de réalisation ;
la figure 4 représente un procédé de fonctionnement d'un dispositif NFC de la figure 1 selon un exemple ;
la figure 5 représente un procédé de fonctionnement d'un dispositif NFC de la figure 1 selon un mode de réalisation ; et
la figure 6 représente un procédé de fonctionnement d'un dispositif NFC de la figure 1 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

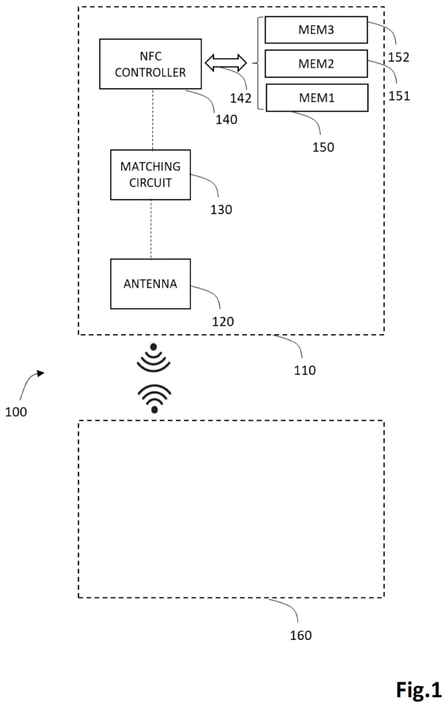

La figure 1 représente une vue très schématique d'un système NFC 100 auquel s'appliquent les modes de réalisation.

Le système NFC 100 comprend un premier dispositif NFC 110 qui peut communiquer avec un deuxième dispositif NFC 160. Cette technologie NFC concerne l'établissement de communications à très courte distance (moins de dix centimètres) entre ces deux dispositifs 110, 160.

Les systèmes NFC ou, en d'autres termes, les systèmes de communication en champ proche utilisent un champ électromagnétique radiofréquence généré par un des deux dispositifs 110, 160 mis en mode terminal ou lecteur pour communiquer avec l'autre dispositif 110, 160 mis en mode carte. L'inverse est également possible. Un même dispositif peut, notamment s'agissant de téléphones mobiles, fonctionner en mode lecteur en générant un champ destiné à un autre dispositif, ou en mode carte en captant un champ généré par un autre dispositif.

Pendant une transmission d'informations entre un des dispositifs 110, 160 en mode lecteur et l'autre dispositif 110, 160 en mode d'émulation de carte - ou d'étiquette (tag en anglais) -, le lecteur génère un champ magnétique par l'intermédiaire de son antenne, qui est généralement une onde sinusoïdale à 13,56 MHz dans les normes utilisées classiquement.

Cette technologie NFC permet également à un dispositif NFC d'alimenter un ou plusieurs autres dispositifs NFC placés à proximité.

Dans la présente description, on considère le cas d'un système dans lequel les dispositifs NFC 110, 160 sont compatibles avec la technologie NFC en reprenant tout ou partie des spécifications du Forum NFC pour le type A ou le type B ou de la norme ISO 14443-3:2018.

Dans l'exemple de la figure 1, le dispositif NFC 110 comprend un circuit d'adaptation 130 (MATCHING CIRCUIT) couplant une antenne 120 (ANTENNA) à un contrôleur NFC 140 (NFC CONTROLLER).

Le contrôleur NFC 140 est par exemple assimilé à une unité de traitement contenant par exemple un microprocesseur relié en outre à une ou plusieurs mémoires 150 (MEM1), 151 (MEM2), et 152 (MEM3), qui sont par exemple des mémoires volatiles ou non volatiles, par l'intermédiaire d'un bus de communication 142. Les mémoires 150, 151, 152 comprennent par exemple des registres pour stocker les configurations du contrôleur NFC 140 ou stocker par exemple des informations relatives à la communication NFC, comme par exemple des données issues du décodage radiofréquence. Les mémoires 150, 151, 152 sont par exemple des mémoires volatiles telles que des mémoires de type RAM ou des registres. Dans un exemple les mémoires 150, 151, 152 sont une seule et même mémoire. Dans un exemple, le contrôleur NFC 140 comprend un circuit de décodage. Dans un autre exemple, le contrôleur NFC 140 est configuré pour exécuter un ou plusieurs programmes.

Dans un exemple, l'un des deux dispositifs 110 ou 160 n'a pas d'alimentation et est alimenté par le champ électromagnétique de l'autre dispositif mis en mode de lecteur (proximity coupling device, PCD, en anglais).

L'un des dispositifs NFC 110 ou le dispositif 160 est par exemple un téléphone ou un téléphone intelligent, smartphone, ou un terminal, émulé en mode lecteur.

Cela permet d'échanger des informations entre l'un des dispositifs NFC fonctionnant comme un lecteur sans contact et des éléments sécurisés situés dans l'autre dispositif NFC par exemple. De nombreuses applications sont ainsi possibles, telles que la billetterie mobile pour les transports publics (la carte ou le téléphone mobile servant de titre de transport) ou le paiement (la carte ou le téléphone mobile servant de carte de paiement). D'autres applications sont également envisageables comme l'intégration au sein d'un passeport.

Dans un exemple, l'ensemble des blocs 130, 140, 142, 150, 151, 152 sont compris dans un microcontrôleur.

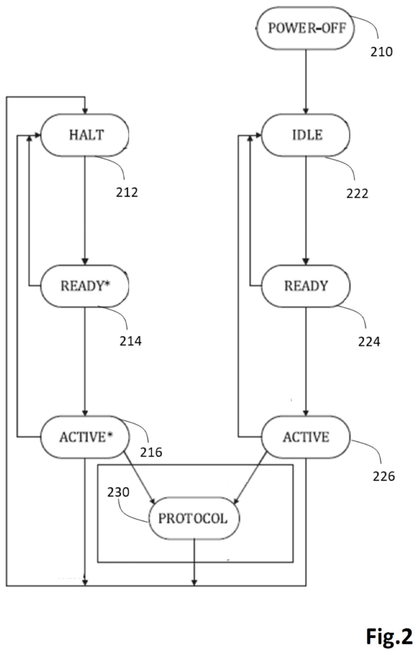

La figure 2 représente un procédé de fonctionnement d'un dispositif NFC du système de la figure 1 selon la norme ISO 14443-3:2018. Plus particulièrement, la figure 2 représente un procédé de fonctionnement d'un des dispositif NFC 110, 160 fonctionnant en tant que carte à couplage inductif de proximité PICC (proximity inductive coupling card, en anglais).

L'exemple de la figure 2 représente, de façon très simplifiée, les états de transitions possibles pour un dispositif NFC 110, 160 en mode de carte à couplage inductif de proximité PICC.

Dans le texte, le mode de carte à couplage inductif de proximité PICC peut être appelé de façon identique « mode de carte ».

Dans une étape 210 (POWER-OFF), le dispositif 110 ou 160 fonctionnant en tant que carte à couplage inductif de proximité rentre dans un champ électromagnétique généré par l'autre dispositif mis en mode lecteur (PCD). Lorsque le champ électromagnétique du lecteur dépasse une certaine valeur, alors une étape 222 (IDLE) est réalisée. La première trame attendue après l'étape 210, est appelée trame courte (short frame en anglais). Elle a un format spécifique comprenant une condition de démarrage, sept bits et une condition de fin.

L'étape 222 correspond à un état, ou mode, dit inactif (IDLE). Dans l'état, ou mode, IDLE, le dispositif PICC est alimenté par le champ électromagnétique de l'autre dispositif NFC. Le dispositif PICC est à l'écoute de commandes appelées REQA et WUPA (respectivement REQB, WUPB pour le type B) dans les normes. Lorsque ces commandes sont reçues de façon valide et qu'une réponse de requête appelé ATQA (respectivement ATQB) a été envoyée vers l'autre dispositif, alors une étape 224 (READY) est mise en œuvre.

L'étape 224 correspond à un état, ou mode, dit prêt (READY). Dans l'état READY, un bit d'anticollision est appliqué et un identifiant unique (UID) est obtenu.

Lorsque l'identifiant unique est sélectionné alors une étape 226 (ACTIVE) est mise en œuvre.

L'étape 226 correspond à un état, ou mode, dit d'activation (ACTIVE). Dans l'état ACTIVE, le dispositif en mode PICC peut accepter de recevoir des commandes d'activation de protocole (RATS) ou de procéder selon d'autres méthodes.

Lorsque qu'une commande valide de type HLTA est reçue alors une étape 212 (HALT) est mise en œuvre.

L'étape 212 correspond à un état, ou mode, dit d'attente (HALT). Dans l'état HALT, le dispositif en mode PICC ne doit répondre qu'à une commande de type WUPA.

Lorsque qu'une commande valide de type WUPA est reçue et qu'une réponse de requête appelé ATQA (respectivement ATQB) a été envoyée vers l'autre dispositif, alors une étape 214 (READY*) est mise en œuvre.

L'étape 214 correspond à un état, ou mode, dit prêt (READY*) similaire à l'état READY à l'exception de transitions entre états. Lorsqu'un identifiant unique UID est reçu complet à cette étape alors une étape 216 (ACTIVE*) est mise en œuvre.

L'étape 216 correspond à un état, ou mode, dit d'activation (ACTIVE*) similaire à l'état ACTIVE. Lorsque, dans les états ACTIVE et ACTIVE*, le dispositif en mode PICC reçoit des commandes d'activation de protocole (RATS) valides alors une étape 230 (PROTOCOL) est mise en œuvre.

L'étape 230 correspond à un état, ou mode, dit de protocole (PROTOCOL) dans lequel le dispositif en mode PICC est alimenté par les ondes électromagnétiques de l'autre dispositif, et une communication s'établit selon un type de protocole de communication défini par des données d'information de type de protocole. Dans l'état PROTOCOL le format attendu des trames reçues est un format dit standard comprenant au minimum un octet, des bits de parité et un code de redondance cyclique codés sur deux octets.

Dans l'exemple de la figure 2 qui illustre la norme ISO 14443-3:2018, dans les états ACTIVE et READY, il est possible de repasser à l'état IDLE par exemple lorsque des erreurs de trames sont détectées. De même, dans les états ACTIVE* et READY*, il est possible de repasser à l'état HALT par exemple lorsque des erreurs de trames sont détectées.

L'exemple de la figure 2 est simplifié et il convient de se référer à la norme ISO 14443-3:2018 pour avoir tous les détails d'implémentation.

De façon générale, un dispositif NFC agissant en tant que PICC selon la norme ISO 14443-3:2018 ou les dispositions du NFC FORUM, ne doit réagir à une trame entrante que si celle-ci est valide. Aucune réponse ne doit être envoyée lorsque des erreurs de transmission sont détectées excepté, éventuellement, dans les états d'activation ACTIVE ou ACTIVE*.

Dans la suite du texte, une trame est dite non valide si elle est erronée, par exemple si la trame contient une erreur correspondant par exemple à au moins un bit erroné, à une erreur de modulation, à une erreur de code redondance cyclique appelée CRC, à une erreur de parité, ou à une erreur de temporalité. De plus, dans le texte, une trame est dite non valide si elle ne comporte pas d'erreur mais si par exemple la trame reçue est d'un format qui est inattendu par rapport à l'état, ou mode, dans lequel se trouve le dispositif PICC 110, 160. Dans un exemple, si le dispositif PICC est dans l'état PROTOCOL et que la trame reçue est du type trame courte, alors bien que ne comportant pas d'erreur, selon la norme ISO 14443:2018, cette trame courte est rejetée car une trame de type standard est attendue à la place.

Dans certains cas, une trame courte est reçue pendant l'état de protocole PROTOCOL du dispositif 110, 160 placé en mode PICC. Il peut être néanmoins utile de pouvoir utiliser, ou tout du moins analyser, cette trame même si la norme ISO 14443-3:2018 ou le NFC FORUM ne décrivent pas ces possibilités.

Dans d'autres cas, la trame reçue, par exemple dans les modes de protocole ou d'activation, est erronée. Il peut être néanmoins utile de pouvoir utiliser, ou tout du moins analyser, cette trame même si la norme ISO 14443-3:2018 ou le NFC FORUM ne décrivent pas ces possibilités.

Les modes de réalisation présentés ci-après prévoient un dispositif NFC configuré pour, dans un mode de carte à couplage inductif de proximité PICC :
- lorsqu'il reçoit une trame qu'il identifie comme non valide, stocker tout ou partie de ladite trame dans une première mémoire du dispositif ; et
- analyser, avec un programme, tout ou partie de ladite trame.

Cela permet d'améliorer l'interopérabilité avec des systèmes ne mettant pas en œuvre la totalité de la norme ISO 14443-3:2018 ou les préconisations du NFC FORUM.

Cela permet en outre de donner de la flexibilité pour implémenter des protocoles propriétaires.

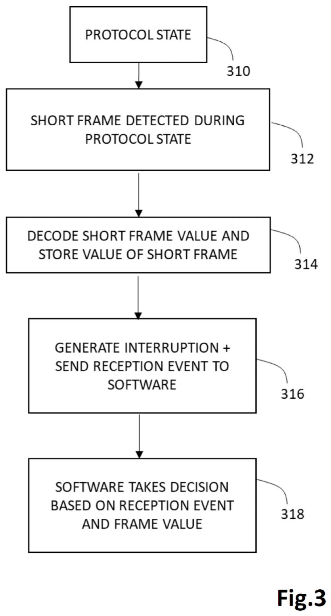

La figure 3 représente un procédé de fonctionnement d'un dispositif NFC de la figure 1 selon un mode de réalisation. Plus particulièrement, l'exemple de la figure 3 représente un procédé de fonctionnement d'un des dispositifs 110, 160 lorsqu'il est dans le mode de carte PICC.

Dans une étape 310 (PROTOCOL STATE), le dispositif 110, 160 est dans l'état de protocole PROTOCOL.

Dans une étape 312 (Short frame detected during protocol state), postérieure à l'étape 310, une trame courte telle que spécifiée comme telle dans la norme ISO 14443-3:2018, est détectée pendant le mode de protocole.

Dans une étape 314 (Decode short frame value and store value of short frame), postérieure à l'étape 312, la trame courte est décodée par un circuit décodeur radiofréquence utilisé par exemple dans l'étape 210 de la figure 2. La trame décodée est stockée par exemple dans la mémoire 150.

Dans une étape 316 (Generate interruption + send reception event to software), postérieure à l'étape 314, une interruption du mode de protocole est générée à la fin du décodage de la trame courte. Dans cette étape le décodeur radiofréquence génère également par exemple un évènement de réception qui est par exemple stocké dans la mémoire 150 ou dans une des mémoires ou registres 151, 152. La trame décodée, et facultativement l'évènement de réception, sont envoyés pour traitement par un programme, par exemple mis en œuvre par le contrôleur NFC 140.

Dans une étape 318 (Software takes decision based on reception event and frame value), postérieure à l'étape 316, le programme exploite la trame décodée, et facultativement l'évènement de réception, pour mettre en œuvre une ou des actions.

Des exemples d'actions décidées par le programme sont l'envoi d'une réponse d'erreur, ou le choix de repasser dans le mode IDLE, ou la sauvegarde de l'évènement, ou retourner dans un état d'attente d'une nouvelle trame dans le mode de protocole PROTOCOL.

Cela permet de supporter par exemple des lecteurs qui ne sont pas compatibles avec la norme ISO 14443-3:2018.

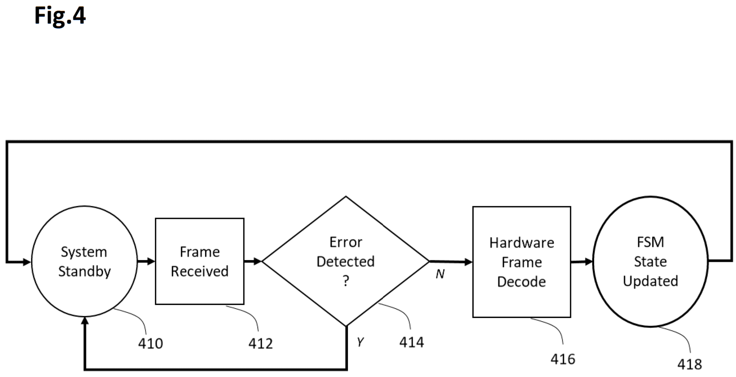

La figure 4 représente un procédé de fonctionnement d'un dispositif NFC de la figure 1 selon un exemple.

Plus particulièrement, l'exemple de la figure 4 représente un procédé de fonctionnement du dispositif 110, 160 placé dans le mode de carte PICC.

Dans une étape 410 (System standby), le dispositif 110, 160 en mode PICC est inactif. Cela correspond par exemple aux modes IDLE ou HALT de la figure 2.

Dans une étape 412 (Frame received), postérieure à l'étape 410, une trame est reçue.

Dans une étape 414 (Error detected ?), postérieure à l'étape 412, si la trame est erronée (branche Y), alors le procédé revient à l'étape 410. Si la trame n'est pas erronée (branche N), alors une étape 416 (Hardware Frame Decode) est mise en œuvre.

Dans l'étape 416, la trame reçue est décodée par le circuit décodeur radiofréquence.

Dans une étape 418 (FSM State Updated), postérieure à l'étape 416, l'état du dispositif est mis à jour et l'étape 410 est de nouveau mise en œuvre.

Le procédé de la figure 4 ne permet pas d'utiliser une trame erronée.

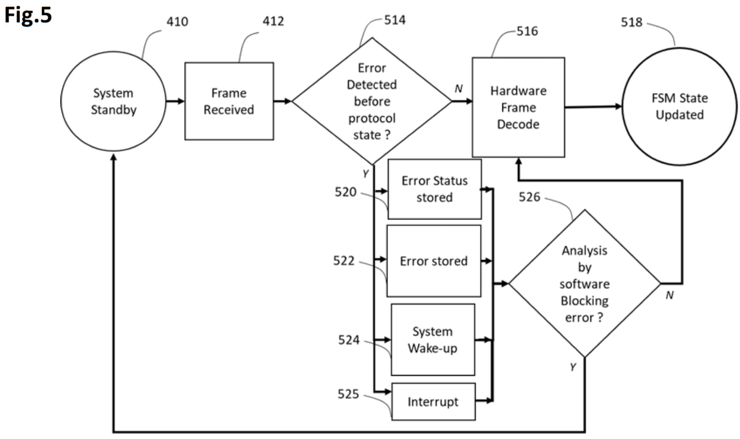

La figure 5 représente un procédé de fonctionnement d'un dispositif NFC de la figure 1 selon un mode de réalisation.

Plus particulièrement, la figure 5 représente un procédé de fonctionnement du dispositif 110, 160 placé dans le mode de carte à couplage inductif de proximité PICC.

Le procédé de la figure 5 comprend les étapes 410 et 412 de la figure 4.

Dans une étape 514 (Error Detected before protocol state ?), postérieure à l'étape 412, si la trame reçue avant l'état de protocole, c'est-à-dire par exemple au mode d'activation ACTIVE, est reconnue comme erronée (branche Y) par exemple par le décodeur radiofréquence, alors des étapes 520 (Error Status stored), 522 (Error stored), 524 (System Wake-up), 525 (Interrupt) sont mises en œuvre. Les étapes 520, 522, 524, 525 sont par exemple mises en œuvre en parallèle ou successivement ou dans un autre ordre. L'étape 522 est facultative.

Dans l'étape 514 (Error Detected before protocol state ?), si la trame reçue avant l'état de protocole, n'est pas erronée (branche N), alors une étape 516 (Hardware Frame Decode) est mise en œuvre.

L'étape 516 est par exemple similaire à l'étape 416 de la figure 4.

Dans l'étape 520, la trame est stockée par exemple dans la mémoire 150.

Dans l'étape 522, un statut d'erreur lié à l'erreur détectée par le décodeur radiofréquence est stocké par exemple dans une des mémoires ou registres 151, 152.

Dans l'étape 524, le contrôleur NFC 140 est réveillé.

Dans l'étape 525, une interruption de fin de réception est mise en œuvre. Cette interruption correspond à une détection du champ électromagnétique reçu, non modulé, pendant un certain temps.

Dans un exemple, suite aux étapes 520, 524 et facultativement l'étape 522, le contrôleur NFC 140 est par exemple réveillé et une étape 526 (Analysis by software Blocking error ?) est mise en œuvre.

L'étape 526 comprend l'analyse de la trame stockée, et facultativement du statut d'erreur, par le programme exécuté par le contrôleur NFC 140.

Dans l'étape 526, si l'erreur est analysée comme bloquante par le programme (branche Y) alors le dispositif 110, 160 PICC est remis dans l'état IDLE ou dans un état propriétaire par exemple. Cela permet une plus grande flexibilité. Si l'erreur est analysée comme non-bloquante par le programme (branche N) alors l'étape 516 est mise en œuvre suivie d'une étape 518 (FSM State Updated) qui est par exemple similaire à l'étape 418.

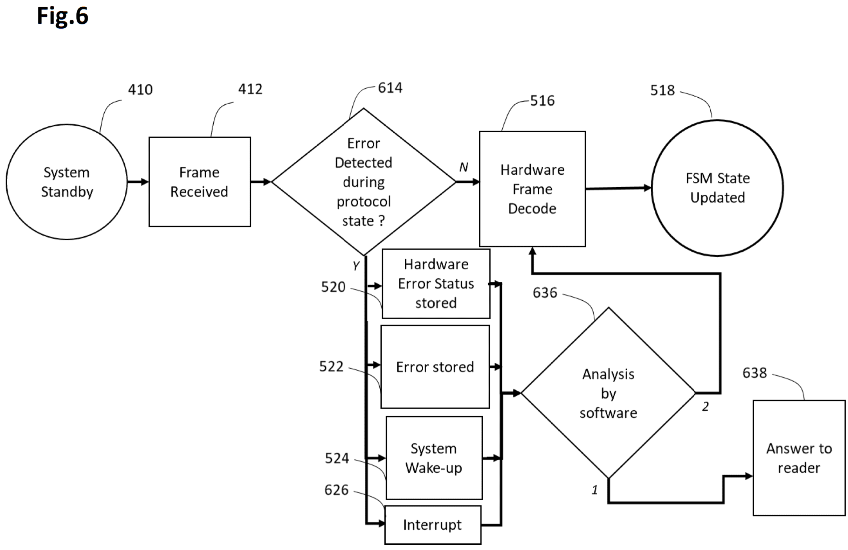

La figure 6 représente un procédé de fonctionnement d'un dispositif NFC de la figure 1 selon un mode de réalisation. Plus particulièrement, la figure 6 représente un procédé de fonctionnement d'un des dispositifs 110, 160 placé dans le mode de carte PICC.

Le procédé de la figure 6 comprend les étapes 410 et 412 de la figure 4.

Dans une étape 614 (Error Detected during protocol state ?), postérieure à l'étape 412, si la trame reçue pendant l'état de protocole est reconnue comme erronée (branche Y), par exemple par le décodeur radiofréquence, alors une étape 626 (Interrupt) est mise en œuvre. Facultativement les étapes 520, 522, et 524 de la figure 5 sont mises en œuvre en parallèle ou successivement par rapport à l'étape 626.

Dans l'étape 626, une interruption de fin de réception est mise en œuvre. Cette interruption correspond à une détection du champ électromagnétique reçu, non modulé, pendant un certain temps. L'étape 626 est par exemple similaire à l'étape 525.

A la suite de l'étape 626, une étape 636 (Analysis by software) est mise en œuvre. Dans l'étape 636, un programme, par exemple exécuté par le contrôleur NFC 140, analyse la trame stockée et facultativement le statut de l'erreur. Une première action possible (branche 1) est par exemple de mettre en œuvre une étape 638 (Answer to reader). Dans l'étape 638, une réponse est envoyée au dispositif 110, 160 qui est en mode lecteur. Cela permet de proposer d'autres options qui ne sont pas prévues dans la norme ISO 14443-3:2018.

Une deuxième action possible (branche 2) dans l'étape 636 consiste par exemple à mettre en œuvre l'étape 516 de la figure 2.

Les exemples des figures 5 et 6 permet d'améliorer l'interopérabilité ainsi que la flexibilité d'utilisation du dispositif 110, 160 mis en mode de carte.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, il est par exemple possible de combiner les exemples des figures 3, 5 et 6 pour couvrir le cas d'une trame non valide mais non erronée, le cas d'une trame erronée reçue avant le mode de protocole, et le cas d'une trame erronée reçue pendant le mode de protocole.

Enfin, la mise en œuvre pratique des modes de réalisation et variantes décrits est à la portée de la personne du métier à partir des indications fonctionnelles données ci-dessus. En particulier, pour ce qui est de la nature des trames des figures 5 et 6, ces exemples sont compatibles avec différents types de trames comme les trames standard, XECC ou propriétaires.

## Revendications

1. Dispositif NFC (110, 160) configuré pour, dans un mode de carte (PICC) :
- lorsqu'il reçoit une trame qu'il identifie comme non valide, stocker tout ou partie de ladite trame dans une première mémoire (150) du dispositif (110, 160) ; et
- analyser tout ou partie de ladite trame.

2. Procédé de fonctionnement d'un dispositif NFC (110, 160), comprenant :
dans un mode de carte (PICC),
- lorsque le dispositif reçoit une trame qu'il identifie comme non valide, stocker tout ou partie de ladite trame dans une première mémoire (150) du dispositif ; et
- analyser tout ou partie de ladite trame.

3. Dispositif selon la revendication 1, ou procédé selon la revendication 2, dans lequel, en fonction de l'analyse, un mode de fonctionnement du dispositif (110, 160) est modifié.

4. Dispositif selon la revendication 1 ou 3, ou procédé selon la revendication 2 ou 3, dans lequel l'identification de la trame comme non valide est mise en œuvre par un décodeur radiofréquence.

5. Dispositif selon l'une quelconque des revendications 1 ou 3 ou 4, ou procédé selon l'une quelconque des revendications 2 à 4, dans lequel l'identification de la trame comme non valide correspond à la réception d'une trame courte telle que définie dans la norme ISO 14443-3:2018 lorsque le dispositif NFC (110, 160) est dans un mode de protocole du mode de carte à couplage inductif de proximité (PICC).

6. Dispositif ou procédé selon la revendication 5, dans lequel, lorsque le dispositif NFC (110, 160) est dans ledit mode de protocole, ladite trame courte est décodée avant d'être stockée dans ladite première mémoire (150).

7. Dispositif ou procédé selon la revendication 6, dans lequel, après décodage, une interruption du mode de protocole (PROTOCOL) est générée.

8. Dispositif ou procédé selon la revendication 7, dans lequel le dispositif est configuré pour, suite à ladite interruption, stocker dans une deuxième mémoire (151) du dispositif au moins un évènement de réception.

9. Dispositif ou procédé selon la revendication 8 dans sa dépendance à la revendication 3, dans lequel l'évènement de réception et le contenu de ladite trame sont analysés par le dispositif pour modifier un mode de fonctionnement du dispositif (110, 160).

10. Dispositif ou procédé selon l'une quelconque des revendications 5 à 9, dans lequel, suite à la réception de ladite trame courte, le dispositif bascule vers un mode propriétaire différent du mode de protocole défini dans la norme ISO 14443-3:2018.

11. Dispositif selon l'une quelconque des revendications 1 ou 3 ou 4, ou procédé selon l'une quelconque des revendications 2 à 4, dans lequel l'identification de la trame comme non valide correspond à l'identification d'une erreur associée à ladite trame.

12. Dispositif ou procédé selon la revendication précédente, dans lequel ladite trame identifiée comme non valide est décodée avant d'être stockée dans ladite première mémoire (150).

13. Dispositif ou procédé selon la revendication 12 dans sa dépendance à la revendication 4, dans lequel l'identification de ladite erreur s'accompagne :
- de la génération, par le décodeur radiofréquence, d'un statut relatif à ladite erreur, et de son stockage dans une troisième mémoire du dispositif ; et
- d'un réveil d'une unité de traitement (140) du dispositif pour démarrer une analyse ;
ledit statut relatif à ladite erreur et le contenu de ladite trame étant analysés, après réveil de ladite unité de traitement (140), pour modifier un mode de fonctionnement du dispositif (100, 160).

14. Dispositif ou procédé selon la revendication précédente, dans lequel, suite à l'analyse du statut relatif à ladite erreur et du contenu de ladite trame, le dispositif (110,160) bascule dans un mode inactif (IDLE) ou dans un mode d'activation (ACTIVE) ou dans un mode propriétaire.

15. Dispositif ou procédé selon la revendication 13, dans lequel, lorsque l'identification de ladite erreur a lieu dans un mode de protocole (PROTOCOL), alors l'identification de ladite erreur est suivie d'une interruption du mode de protocole.
